# EUROPÄISCHE PATENTSCHRIFT

(11) **EP 1 864 958 B1**
(45) Veröffentlichungstag und Bekanntmachung des Hinweises auf die Patenterteilung: **26.12.2018**
(21) Anmeldenummer: 07005426.7
(22) Anmeldetag: 16.03.2007
(51) Int. Cl.: C04B 35/573, C04B 35/80, C04B 37/00, F16D 65/12, F16D 69/02

(54) **Verfahren zur Herstellung von Reibscheiben aus keramischen Werkstoffen mit verbesserter Reibschicht**
Method for manufacturing friction discs made of ceramic materials with an improved friction layer
Procédé de fabrication de disques de frottement en matière céramique avec couche de frottement améliorée

(30) Priorität: 08.06.2006 DE 10626549
(43) Veröffentlichungstag der Anmeldung: 12.12.2007
(73) Patentinhaber: AUDI AG, 85045 Ingolstadt (DE)
(72) Erfinder: Kienzle, Andreas, 86753 Balgheim (DE); Krätschmer, Ingrid, 86485 Biberach (DE)
(74) Vertreter: Bauer, Dominik Michael

(56) Entgegenhaltungen:
- EP-A- 1 640 633
- EP-A- 1 783 395
- WO-A-99/41069
- DE-A1- 10 048 012
- DE-A1- 10 060 566
- DE-C1- 19 711 829

## Beschreibung

Die Erfindung betrifft ein Verfahren zur Herstellung von Reibscheiben aus keramischen Werkstoffen mit verbesserter Reibschicht, und ein Verfahren zur Herstellung eines Verbunds. Keramische Werkstoffe zeichnen sich gegenüber Metallen unter anderem durch hohe Härte, sowie thermische Beständigkeit und Beständigkeit gegen Korrosion aus. Die geringere Festigkeit und höhere Bruchempfindlichkeit von keramischen Werkstoffen kann durch in keramischen Verbundwerkstoffen enthaltene Verstärkungsfasern kompensiert werden. Die als disperse Phase in den keramischen Werkstoffen enthaltenen Verstärkungsfasern wirken als Rißverzweigungs- und Rißumlenkungsstellen; dabei können die mechanischen Spannungen auf ein größeres Volumenelement verteilt und unter die (lokale) Bruchfestigkeit erniedrigt werden.

Einerseits bewirken diese Fasern, die bevorzugt aus Kohlenstoff bestehen, bei guter Anbindung an die Matrix des keramischen Werkstoffs eine erhebliche Erhöhung der Steifigkeit (Modul) und Festigkeit des Werkstoffs, andererseits können diese Fasern als Oxidationswege wirken, da Fasern aus Kohlenstoff bei hohen Betriebstemperaturen oxydativ geschädigt werden, und "verbrannte" Fasern Kanäle bilden können, längs derer Sauerstoff ins Innere des Werkstücks gelangen kann und so zu weiterer Schädigung führen kann. Durch "verbrannte" Fasern wird bei der Anwendung als Bremsscheibe zusätzlich die Oberfläche der Bremsscheibe rauher, dies bewirkt einen stärkeren abrasiven Verschleiß der Bremsbeläge.

Bremsscheiben aus keramischen Verbundwerkstoffen beispielsweise zeichnen sich gegenüber Bremsscheiben aus Metall unter anderem durch niedrigere Dichte, niedrigeren Verschleiß und höhere Verzögerungsleistung aus.

Aus dem Stand der Technik (DE 100 48 012 A1) sind solche Carbon-Keramik-Bremsscheiben bekannt, die einen mehrschichtigen Aufbau aus Tragkörper und Reibschichten haben, und bei denen der Tragkörper mit langen Fasern aus Kohlenstoff (mittlere Länge zwischen 4 mm und 20 mm) verstärkt ist, und die Reibschichten Kurzfasern aus Kohlenstoff (mittlere Länge zwischen 0,5 mm und 8 mm) als Verstärkungsmittel aufweisen. Eine Verstärkung des Werkstoffs durch Fasern aus Kohlenstoff ist für die Funktion der Reibschicht nicht wesentlich; der Gehalt an Fasern wirkt sich aber auf die Ausbildung von Rißstrukturen und auf den thermischen Ausdehnungskoeffizienten aus.

In den Untersuchungen, die der vorliegenden Erfindung zugrundelagen, wurde gefunden, daß bei thermischer Belastung die an der Oberfläche liegenden Fasern aus Kohlenstoff bevorzugt oxydieren und daher Fehlstellen und Rauhigkeiten bilden. Es besteht daher die Aufgabe, Fasern aus Kohlenstoff als Verstärkungsmittel für keramische Werkstoffe zur Anwendung in Reibschichten zumindest teilweise zu ersetzen, um die oxydative und thermische Stabilität dieser Werkstoffe zu verbessern.

Es wurde gefunden, daß zur Herstellung der Reibschichten eine Mischung von feinteiligem Silicium und/oder feinen Teilchen von anderen carbidbildenden Elementen mit einem Harz in partikulärer Form und gegebenenfalls feinteiligem Kohlenstoff sowie gegebenenfalls Kurzfasern aus Kohlenstoff eingesetzt werden kann, wobei der Massenanteil an Fasern vermindert werden kann auf maximal 50 % der zur Herstellung der Reibschicht eingesetzten Rohstoffe, oder sogar ganz auf Verstärkungsfasern verzichtet werden kann.

Als "feine Teilchen" oder "feinteilig" werden solche Partikel bezeichnet, die eine mittlere Teilchengröße von bis zu 2000 µm, insbesondere 350 µm, bevorzugt von 5 µm bis zu 250 µm, und besonders bevorzugt von 10 µm bis zu 150 µm aufweisen. Die genannten Harze in partikulärer Form genügen derselben angegebenen Teilchengrößenverteilung. Im Fall der Verwendung von Silicium wird bevorzugt eine Korngröße (Teilchendurchmesser) im Bereich von 50 µm bis 2 mm eingesetzt.

Die Kurzfasern aus Kohlenstoff liegen bevorzugt in Form von Bündeln vor, wobei ca. 500 bis ca. 20 000 Einzelfasern ein solches Bündel bilden. Die Länge der Kurzfasern beträgt 0.001 mm bis 30 mm, bevorzugt 0,1 mm bis 15 mm, und besonders bevorzugt 0,2 mm bis 5 mm.

Die Erfindung betrifft daher ein Verfahren zur Herstellung von Reibscheiben aus keramischen Werkstoffen mit mindestens einer Reibschicht, deren Matrix Siliciumcarbid, Silicium und Kohlenstoff enthält, gemäß Anspruch 1.

Es ist möglich, hierbei die Bindemittel in Pulverform oder in flüssiger oder zähflüssiger Form zu verwenden. Dabei ist bevorzugt, ein Harz in partikulärer Form mit einem pulverförmigen Pech oder einer pulverförmigen Mischung von Pech und Harzen zu verwenden. Als Harze werden Phenolharze und Furanharze bevorzugt. Eine andere bevorzugte Ausführungsform ist die Verwendung von partikulärem Harz, insbesondere Phenolharzen und Furanharzen, mit flüssigen oder zähflüssigen Phenolharzen oder Pechen. Trockenmischungen können in einem Rührwerk, flüssige oder pastöse Mischungen in einem Kneter hergestellt werden. Eine Trockenmischung muß vor oder während der Formgebung entlüftet werden, bei flüssigen oder pastösen Mischungen werden diese bereits während des Mischvorgangs ohne weiteres Zutun entlüftet. Der durch Verdichten aus einer derartigen Mischung hergestellte Formkörper soll bevorzugt eine Porosität von höchstens 15 % aufweisen, gemessen als Volumenanteil von Poren in dem Formkörper. Zur Herstellung von Reibscheiben werden diese Mischungen bei Temperaturen von bis zu 280 °C, bevorzugt bis zu 220 °C, und insbesondere bis zu 180 °C zu zylindrischen Ringscheiben verpreßt und gehärtet. Die so erhaltenen Formkörper werden allein oder in einem Verbund mit einem ebenfalls zylinderringförmigen Tragkörper zu Reibscheiben weiterverarbeitet.

Dazu werden in dieser ersten Alternative die Formkörper unter Ausschluß von oxydierenden Agenzien auf eine Temperatur von ca. 750 °C bis ca. 1300 °C erhitzt, bevorzugt von 900 °C bis 1200 °C, wobei die Bindemittel sich unter Bildung eines Kohlenstoffrückstands zersetzen. Der gebildete poröse Kohlenstoff-Körper enthält das in der Mischung ursprünglich enthaltene feinteilige Silicium oder ursprünglich enthaltene feine Teilchen anderer carbidbildender Elemente. Der gebildete Kohlenstoff-Rückstand behält dabei im wesentlichen die Form, die das Bindemittel in den Zwickeln und Bereichen zwischen den feinen Teilchen von Silicium und anderen carbidbildenden Elementen eingenommen hat. Beim weiteren Erhitzen bis über die Schmelztemperatur des Silicium oder der anderen carbidbildenden Elemente reagieren diese mit dem gebildeten Kohlenstoff und ergeben eine alveoläre Struktur mit einem Gerüst aus den gebildeten Carbiden und nicht umgesetzten Resten von Kohlenstoff oder den carbidbildenden Elementen. Diese alveoläre Struktur wird anschließend mit weiterem Silicium bei einer Temperatur oberhalb von dessen Schmelztemperatur infiltriert, wobei sich zumindest ein Teil der Poren der Struktur mit elementarem Silicium füllt, und nicht umgesetzter Kohlenstoff der alveolären Struktur mit Silicium zu Siliciumcarbid reagiert. Man erhält dabei einen Formkörper enthaltend Siliciumcarbid, Silicium sowie Reste von nicht umgesetztem Kohlenstoff.

Die Erfindung betrifft weiter ein Verfahren zur Herstellung eines Verbundes gemäß Anspruch 2, wobei in dieser zweiten Alternative die porösen Kohlenstoff-Körper, hergestellt wie oben beschrieben, auf einen vorher separat hergestellten Tragkörper aus mit Fasern bevorzugt aus Kohlenstoff verstärktem Kohlenstoff auf dessen beiden kreisringförmigen Deckflächen aufgelegt und gegebenenfalls fixiert werden, beispielsweise durch flächiges oder punktförmiges Verkleben oder durch Verstiften. Diese Verbunde werden anschließend aufgeheizt und mit flüssigem Silicium infiltriert, wobei sich in bekannter Weise aus Silicium und dem Kohlenstoff der aufgelegten porösen Kohlenstoff-Körper und des Tragkörpers Siliciumcarbid bildet.

Bevorzugt wird als carbidbildendes Element Silicium oder eine dieses enthaltende Mischung gewählt; die Matrix enthält dann, gegebenenfalls in Mischung mit anderen Carbiden, Siliciumcarbid. Andere carbidbildende Elemente, die für die Erfindung bevorzugt in Mischung mit Silicium verwendet werden können, sind Chrom, Molybdän, Wolfram, Eisen, Kobalt, Nickel, Kupfer, Vanadium, Niob, Tantal, Titan, Zirkon und Hafnium.

Der Massenanteil der feinteiligen carbidbildenden Elemente in der Mischung zur Herstellung der Reibschicht beträgt 20 % bis 70 %, bevorzugt 30 % bis 65 %, und besonders bevorzugt 35 % bis 60 %. Dementsprechend ist der Massenanteil an Bindemitteln und partikulären Harzen in der Mischung von 30 % bis 80 %, bevorzugt von 35 % bis 70 %, und besonders bevorzugt von 40 % bis 65 %. Die Mischung enthält optional einen Massenanteil von bis zu 50 % an feinteiligem Kohlenstoff und ebenfalls optional einen Massenanteil von bis zu 50 % an Kurzfasern aus Kohlenstoff.

Bevorzugt werden als Bindemittel solche Stoffe eingesetzt, die bei Erhitzen unter Ausschluß von oxydierenden Agenzien auf Temperaturen von 750 ° C bis 1300 °C einen möglichst hohen Rückstand an Kohlenstoff ergeben, beispielsweise Phenolharze, Furanharze, aromatische Polymere wie aromatische Polyester, Polyamide oder Polyimide. Ebenso geeignet, auch in Mischung mit den genannten Polymeren, sind Peche.

Fasern aus Kohlenstoff werden in einen Massenanteil von maximal 10 % eingesetzt.

Die gemäß der Erfindung hergestellten Reibscheiben werden insbesondere als Bremsscheiben und Kupplungsmitnehmerscheiben verwendet.

Die Erfindung wird durch die nachfolgenden Beispiele näher erläutert.

### Beispiel 1 Herstellung einer Mischung für die Reibschicht

500 g eines Silicium-Granulats (®Silgrain, Fa. Elkem, Durchmesser der Teilchen bis zu 70 µm) wurden mit 400 g eines trockenen Phenolharzpulvers(®Bakelite 223, Fa. Hexion) in einem Intensivmischer der Fa. Eirich bei 300 min⁻¹ vorgemischt. Anschließend wurden bei einer erhöhten Drehzahl von 1200 min⁻¹ innerhalb von 5 Minuten 300 ml einer wäßrigen Lösung von Polyvinylalkohol (Massenkonzentration in der Lösung: 5 g in 100 g) zugesetzt. Es bildet sich eine als "Granulat" bezeichnete klumpige Masse. Diese wird in einem Trockenschrank auf eine Restfeuchte von ca. 2,5 % getrocknet (restlicher Massenanteil von Wasser im Granulat).

### Beispiel 2 Herstellung eines Formkörpers für eine Reibschicht

350 g des getrockneten Granulats von Beispiel 1 wurden in eine zylindrische Preßform mit einem Außendurchmesser von 350 mm und einem Durchmesser des inneren Zylinders von 180 mm auf gleiche Höhe eingefüllt, und bei einem Druck von 170 MPa und einer Temperatur von 150 °C zehn Minuten lang gepreßt. Nach dem Aushärten wurde eine 3 mm dicke zylinderringförmige Scheibe mit einem Außendurchmesser von 350 mm und einem Innendurchmesser von 180 mm erhalten.

### Beispiel 3 Herstellung eines Tragkörpers

Gemäß der Beschreibung in der Patentanmeldung DE 197 10 105 A1 wurden beschichtete Graphit-Kurzfasern hergestellt. Mit diesen Fasern wurde eine Preßmasse zubereitet aus 25 kg einer Fraktion der genannten Fasern mit einem Längenbereich von 1 mm bis 2 mm, 6 kg einer Fraktion der genannten Fasern mit einem Längenbereich von bis zu 0,5 mm, und 4 kg einer Faserfraktion mit einem Längenbereich von 0,5 mm bis 1 mm, und 10 kg eines Phenolharzes (®Norsophen 1203), wobei diese Mischung in einem Intensivmischer der Firma Eirich acht Minuten bei einer Drehzahl von 500 min⁻¹ homogenisiert wurde. 3,2 kg der so hergestellten Preßmasse wurden in eine Form in Gestalt eines Zylinderrings mit einem Außendurchmesser von 360 mm und einem Innendurchmesser von 160 mm gefüllt. Kunststoffkerne mit der Form der gewünschten Kühlkanäle wurden beim Befüllen in die Form eingelegt. In einer Warmfließpresse bei einem Druck von 2,5 N/mm² und einer Temperatur von bis zu 180 °C wurde die Masse zu einem Grünling gehärtet, der anschließend bei ca. 900 °C unter Ausschluß von oxydierenden Agenzien carbonisiert wurde unter Bildung eines porösen faserverstärkten Kohlenstoff-Körpers. Der Körper erlitt einen Massenverlust von 12,5 %, bezogen auf die Einsatzmasse. Der Körper wurde auf die gewählte Endgeometrie bearbeitet.

### Beispiel 4 Herstellung einer Verbundscheibe aus einem carbonisierten Tragkörper und zwei zylindrischen Preßplatten gemäß Beispiel 2

Zwei Preßplatten gemäß Beispiel 2 wurden in einem Ofen bei einer Heizrate von 2 K/min unter Schutzgas (Argon) auf eine Temperatur von 900 °C erhitzt, wobei die gehärteten Phenolharzanteile zu amorphem Kohlenstoff umgewandelt wurden. Diese Scheiben wurden nach Abkühlen und Entnahme aus dem Ofen auf jeweils eine Deckfläche eines zylinderringförmigen Tragkörpers gemäß Beispiel 3 mit einem Phenolharzkleber fixiert. Durch Härten in einer Presse bei 140 °C und einem Druck von 100 MPa wurde eine Verbundscheibe mit einer Masse von ca. 2200 g hergestellt. Die Scheibe wurde in einen Graphittiegel auf drei poröse Kohlenstoff-Dochte aufgelegt, der Tiegel wurde mit 2800 g Silicium-Granulat (Körnung bis 2 mm) befüllt und in einem Vakuumofen unter vermindertem Druck (ca. 5 mbar) auf eine Temperatur von ca. 1700 °C erhitzt. Die Aufheizraten betrugen 5 K/min bis zu 1420 °C, und 2 K/min bis zu 1700 °C; das Silicium schmolz ab 1420 °C und drang über die offenen Poren in den Verbundkörper ein, wo es mit dem Kohlenstoff zu SiC reagierte. Nach dem Abkühlen wurde das gebildete C/SiC-Bauteil entnommen und an den freien Deckflächen überschliffen.

## Patentansprüche

1. Verfahren zur Herstellung von Reibscheiben aus keramischen Werkstoffen mit mindestens einer Reibschicht, deren Matrix Siliciumcarbid, Silicium und Kohlenstoff enthält, wobei
- im ersten Schritt eine Mischung von feinteiligem Silicium und/oder feinen Teilchen von anderen carbidbildenden Elementen mit mindestens einer weiteren Komponente ausgewählt aus einem Harz in partikulärer Form und einem Bindemittel ausgewählt aus Kunstharzen, Pechen und Mischungen von diesen, bereitet wird,
- im zweiten Schritt die Mischung entlüftet und bei erhöhter Temperatur von bis zu 280 °C zu einer zylindrischen oder zylinderringförmigen Scheibe verpresst und gehärtet wird,
- im dritten Schritt die gehärtete Scheibe durch Erhitzen unter Ausschluss von oxydierenden Agenzien auf eine Temperatur von ca. 750 °C bis ca. 1300 °C behandelt wird, wobei die Bindemittel sich unter Bildung eines Kohlenstoffrückstands zersetzen, und ein poröser Kohlenstoffkörper zurückbleibt,
- im vierten Schritt der poröse Kohlenstoffkörper bis über die Schmelztemperatur des Siliciums oder der anderen carbidbildenden Elemente erhitzt wird, wobei diese mit dem gebildeten Kohlenstoff reagieren und eine alveoläre Struktur ergeben mit einem Gerüst aus den gebildeten Carbiden und nicht umgesetzten Resten von Kohlenstoff oder den carbidbildenden Elementen,
- im fünften Schritt weiteres Silicium zugegeben wird bei einer Temperatur oberhalb von dessen Schmelztemperatur, wobei sich zumindest ein Teil der Poren der Struktur mit elementarem Silicium füllt, und nicht umgesetzter Kohlenstoff der alveolären Struktur mit Silicium zu Siliciumcarbid reagiert,
**dadurch gekennzeichnet, dass** die im ersten Schritt eingesetzte Mischung Massenanteile enthält von 20 % bis 70 % von feinteiligem Silicium mit einer mittleren Teilchengröße von 5 µm bis 250 µm und/oder von feinteiligen anderen carbidbildenden Elementen mit einer mittleren Teilchengröße von 5 µm bis 250 µm, von 30 % bis 80 % von Bindemitteln oder von Harzen in partikulärer Form, und von maximal 10 % an Fasern aus Kohlenstoff, wobei diese Kurzfasern sind mit einer Länge von 0,001 mm bis 30 mm.

2. Verfahren zur Herstellung eines Verbundes aus einem separat hergestellten Tragkörper aus mit Fasern bevorzugt aus Kohlenstoff verstärktem Kohlenstoff mit zwei kreisringförmigen Deckflächen und porösen Kohlenstoff-Körpern, wobei diese porösen Kohlenstoff-Körper hergestellt werden, indem
- im ersten Schritt eine Mischung von feinteiligem Silicium und/oder feinen Teilchen von anderen carbidbildenden Elementen mit mindestens einer weiteren Komponente ausgewählt aus einem Harz in partikulärer Form und einem Bindemittel ausgewählt aus Kunstharzen, Pechen und Mischungen von diesen, bereitet wird,
- im zweiten Schritt die Mischung entlüftet und bei erhöhter Temperatur von bis zu 280 °C zu einer zylindrischen oder zylinderringförmigen Scheibe verpresst und gehärtet wird,
- im dritten Schritt die gehärtete Scheibe durch Erhitzen unter Ausschluss von oxydierenden Agenzien auf eine Temperatur von ca. 750 °C bis ca. 1300 °C behandelt wird, wobei die Bindemittel sich unter Bildung eines Kohlenstoffrückstands zersetzen, und ein poröser Kohlenstoffkörper zurückbleibt,
wobei die im ersten Schritt eingesetzte Mischung Massenanteile enthält von 20 % bis 70 % von feinteiligem Silicium mit einer mittleren Teilchengröße von 5 µm bis 250 µm und/oder von feinteiligen anderen carbidbildenden Elementen mit einer mittleren Teilchengröße von 5 µm bis 250 µm, von 30 % bis 80 % von Bindemitteln oder von Harzen in partikulärer Form, und von maximal 10 % an Fasern aus Kohlenstoff, wobei diese Kurzfasern sind mit einer Länge von 0,001 mm bis 30 mm,
danach diese porösen Kohlenstoff-Körper auf beide kreisringförmigen Deckflächen des Tragkörpers aufgelegt werden, anschließend gemeinsam aufgeheizt und mit flüssigem Silicium infiltriert werden, wobei sich aus dem Silicium und dem Kohlenstoff der aufgelegten porösen Kohlenstoff-Körper und des Tragkörpers Siliciumcarbid bildet.

3. Verfahren nach Anspruch 2, **dadurch gekennzeichnet, dass** die porösen Kohlenstoffkörper und der Tragkörper vor dem Aufheizen und der Infiltration miteinander fixiert werden durch flächiges oder punktförmiges Verkleben oder durch Verstiften.

4. Verfahren nach einem der vorangehenden Ansprüche, **dadurch gekennzeichnet, dass** die Mischung des ersten Schrittes feinteiliges Silicium und ein Phenolharz in partikulärer Form enthält.

## Claims

1. Method for manufacturing friction discs made of ceramic materials with at least one friction layer, the matrix of which includes silicon carbide, silicon and carbon, wherein
- in a first step a mixture is prepared from finely particulate silicone and/or fine particles of other carbide-forming elements with at least one further component selected from one resin in particular form and a binding agent selected from synthetic resins, pitches and mixtures of these,
- in a second step the mixture is de-aerated and at a raised temperature of up to 280 °C pressed and hardened to a cylindrical or cylindrical ring-shaped disc,
- in a third step the hardened disc is treated by heating in the absence of oxidising agents to a temperature of approximately 750 °C to approximately 1300 °C, wherein the binding agents decompose while forming a carbon residue, and a porous carbon body remains,
- in a fourth step the porous carbon body is heated to above the melting point of the silicon or the other carbide forming elements, wherein these react with the carbon which is formed and result in an alveolar structure with a lattice from the carbides formed and non-transformed remains of carbon or the carbide-forming elements,
- in a fifth step further silicon is added at a temperature above its melting point, wherein at least a part of the pores of the structure fills with elemental silicon and non-transformed carbon of the alveolar structure reacts with silicon to form silicon carbide,
**characterised in that** the mixture used in the first step includes proportions by mass of 20 % to 70 % of finely particulate silicone with an average particle size of 5 µm to 250 µm and/or of finely particulate other carbide-forming elements with an average particle size of 5 µm to 250 µm, of 30 % to 80 % of binding agents or resins in particular form, and of maximum 10 % of fibres made of carbon, wherein these short fibres have a length of from 0.001 mm to 30 mm.

2. Method for manufacturing a laminate made of a separately manufactured support body made of carbon reinforced with fibres preferably made of carbon with two circular ring-shaped top surfaces and porous carbon bodies,
wherein these porous carbon bodies are manufactured in that
- in a first step a mixture is prepared from finely particulate silicon and/or fine particles of other carbide-forming elements with at least one further component selected from one resin in particular form and a binding agent selected from synthetic resins, pitches and mixtures of these,
- in a second step the mixture is de-aerated and at a raised temperature of up to 280 °C pressed and hardened to a cylindrical or cylindrical ring-shaped disc,
- in a third step the hardened disc is treated by heating in the absence of oxidising agents to a temperature of approximately 750 °C to approximately 1300 °C, wherein the binding agents decompose while forming a carbon residue, and a porous carbon body remains,
wherein the mixture used in the first step includes proportions by mass of 20 % to 70 % of finely particulate silicone with an average particle size of 5 µm to 250 µm and/or of finely particulate other carbide-forming elements with an average particle size of 5 µm to 250 µm, of 30 % to 80 % of binding agents or resins in particular form, and of maximum 10 % of fibres made of carbon, wherein these short fibres have a length of from 0.001 mm to 30 mm,
whereafter these porous carbon bodies are laid on both circular ring-shaped top surfaces of the support body, subsequently heated together and infiltrated with liquid silicon, wherein from the silicon and the carbon of the laid-on porous carbon bodies and the support body, silicon carbide forms.

3. Method according to claim 2, **characterised in that** the porous carbon bodies and the support body prior to the heating and the infiltration are fixed with one another by means of planar or punctual gluing or by pinning.

4. Method according to any of the preceding claims, **characterised in that** the mixture of the first step includes finely particulate silicon and a phenol resin in particular form.

## Revendications

1. Procédé de fabrication de disques de friction en matières céramiques avec au moins une couche de friction dont la matrice inclut du carbure de silicium, du silicium et du carbone,
dans lequel
- dans la première étape, on prépare un mélange de silicium en fines particules et/ou de fines particules d'autres éléments formant du carbure avec au moins un autre composant choisi parmi une résine sous une forme particulaire et avec un liant choisi parmi des résines synthétiques, des poix et des mélanges de ceux-ci,
- dans la deuxième étape, on désaère le mélange et on le presse et le durcit en un disque cylindrique ou en forme d'anneau de cylindre à une température augmentée allant jusqu'à 280 °C,
- dans la troisième étape, on traite le disque durci par chauffage à l'exclusion d'agents oxydants à une température comprise entre 750 °C environ et 1300 °C environ, étape dans laquelle les liants se décomposent en formant un résidu de carbone et un corps en carbone poreux reste,
- dans la quatrième étape, on chauffe le corps en carbone poreux à une température supérieure à la température de fusion du silicium ou des autres éléments formant du carbure, étape dans laquelle ces derniers réagissent avec le carbone formé et donnent une structure alvéolaire avec un squelette constitué des carbures formés et de restes non transformés de carbone ou des éléments formant du carbure,
- dans la cinquième étape, on ajoute encore du silicium à une température supérieure à la température de fusion de celui-ci, étape dans laquelle au moins une partie des pores de la structure se remplit de silicium élémentaire et du carbone non transformé de la structure alvéolaire réagit avec du silicium pour former du carbure de silicium,
**caractérisé en ce que** le mélange utilisé dans la première étape inclut des fractions massiques de 20 % à 70 % de silicium en fines particules avec une dimension moyenne de particules comprise entre 5 µm et 250 µm et/ou d'autres éléments à fines particules formant du carbure avec une dimension moyenne de particules comprise entre 5 µm et 250 µm, de 30 % à 80 % de liants ou de résines sous une forme particulaire et au maximum 10 % de fibres en carbone, ces fibres courtes ayant une longueur comprise entre 0,001 mm et 30 mm.

2. Procédé de fabrication d'un composite constitué d'un support fabriqué séparément à partir de carbone renforcé par des fibres de préférence en carbone avec deux surfaces de couverture en forme d'anneau de cercle et avec des corps en carbone poreux,
dans lequel ces corps en carbone poreux sont fabriqués de la manière suivante
- dans la première étape, on prépare un mélange de silicium en fines particules et/ou de fines particules d'autres éléments formant du carbure avec au moins un autre composant choisi parmi une résine sous une forme particulaire et avec un liant choisi parmi des résines synthétiques, des poix et des mélanges de ceux-ci,
- dans la deuxième étape, on désaère le mélange et on le presse et le durcit en un disque cylindrique ou en forme d'anneau de cylindre à une température augmentée allant jusqu'à 280 °C,
- dans la troisième étape, on traite le disque durci par chauffage à l'exclusion d'agents oxydants à une température comprise entre 750 °C environ et 1300 °C environ, étape dans laquelle les liants se décomposent en formant un résidu de carbone et un corps en carbone poreux reste,
dans lequel le mélange utilisé dans la première étape inclut des fractions massiques de 20 % à 70 % de silicium en fines particules avec une dimension moyenne de particules comprise entre 5 µm et 250 µm et/ou d'autres éléments à fines particules formant du carbure avec une dimension moyenne de particules comprise entre 5 µm et 250 µm, de 30 % à 80 % de liants ou de résines sous une forme particulaire et au maximum 10 % de fibres en carbone, ces fibres courtes ayant une longueur comprise entre 0,001 mm et 30 mm,
puis on applique ces corps en carbone poreux sur deux surfaces de couverture en forme d'anneau de cercle du support, on les chauffe ensuite ensemble et on les infiltre avec du silicium liquide, du carbure de silicium se formant à partir du silicium et du carbone des corps en carbone poreux appliqués et du support.

3. Procédé selon la revendication 2, **caractérisé en ce que**, avant le chauffage et l'infiltration, on fixe ensemble les corps en carbone poreux et le support au moyen d'un collage surfacique ou ponctuel ou au moyen de goupilles.

4. Procédé selon l'une quelconque des revendications précédentes, **caractérisé en ce que** le mélange de la première étape inclut du silicium en fines particules et une résine phénolique sous forme particulaire.
